# EUROPEAN PATENT SPECIFICATION

(11) **EP 4 372 709 B1**
(45) Date of publication and mention of the grant of the patent: **29.07.2026**
(21) Application number: 23729285.9
(22) Date of filing: 12.06.2023
(51) Int. Cl.: G08B 21/02, G02B 27/01, H04N 13/332, H04N 23/57, H04N 21/431, G06T 19/00, G06V 20/64, G06V 40/19, G06T 7/50, G06T 7/70

(54) **ELECTRONIC DEVICE AND METHOD FOR PROVIDING NOTIFICATION INFORMATION**
ELEKTRONISCHE VORRICHTUNG UND VERFAHREN ZUR BEREITSTELLUNG VON BENACHRICHTIGUNGSINFORMATIONEN
DISPOSITIF ÉLECTRONIQUE ET PROCÉDÉ DE FOURNITURE D'INFORMATIONS DE NOTIFICATION

(30) Priority: 07.10.2022 KR 20220129086; 29.11.2022 KR 20220162939
(43) Date of publication of application: 22.05.2024
(73) Proprietor: Samsung Electronics Co., Ltd., Suwon-Si, Gyeonggi-do 16677 (KR)
(72) Inventor: NAM, Seungho, Suwon-Si, Gyeonggi-do 16677 (KR); KANG, Jinmo, Suwon-Si, Gyeonggi-do 16677 (KR); KIM, Sungoh, Suwon-Si, Gyeonggi-do 16677 (KR); LEE, Sanghun, Suwon-Si, Gyeonggi-do 16677 (KR); KIM, Jihyun, Suwon-Si, Gyeonggi-do 16677 (KR); YEOM, Donghyun, Suwon-Si, Gyeonggi-do 16677 (KR); LEE, Gunhee, Suwon-Si, Gyeonggi-do 16677 (KR); HWANG, Seonho, Suwon-Si, Gyeonggi-do 16677 (KR)
(74) Representative: Nederlandsch Octrooibureau
(86) International application number: PCT/KR2023/008008
(87) International publication number: WO 2024/075924

(56) References cited:
- KR-A- 20140 020 177
- KR-A- 20160 016 540
- KR-A- 20220 040 884
- KR-A- 20220 040 884
- KR-A- 20220 062 197
- US-A1- 2015 153 570
- US-A1- 2015 310 667
- US-A1- 2021 097 408

## Description

### [Technical Field]

The descriptions below relate to an electronic device and a method for providing notification information.

### [Background Art]

In an augmented reality (AR) environment, an electronic device may provide a user with more diverse experiences by disposing information generated based on information obtained through an external device and the like in a real environment. At this time, the users may provide a response to an image displayed through the display of the electronic device, and the electronic device may obtain information of the user.

For example, KR 2022/0040884 A describes an electronic device which acquires information on an external object, determines an importance of the external object through the information, and displays at least one augmented reality object or at least one virtual reality object in a first area in response to at least one of determining that the importance is less than a first importance and that the information on the external object has not been acquired. The electronic device also displays an indicator in a second area so that the indicator has a first size and removes at least a part of the at least one augmented reality object or the at least one virtual reality object according to priorities.

### [Disclosure]

### [Technical Solution]

The inventions is defined by the appended claims 1-15.

### [Description of the Drawings]

FIG. 1 illustrates a block diagram of an electronic device in a network environment according to various embodiments.
FIG. 2A illustrates an example of providing an augmented reality (AR) environment through an electronic device.
FIG. 2B illustrates an example of an electronic device providing an augmented reality (AR) environment.
FIG. 2C illustrates an example of providing a different augmented reality (AR) environment according to information of a user.
FIG. 3 illustrates a flowchart illustrating an example of a method for providing notification information according to information of a user.
FIG. 4 illustrates a flowchart illustrating an example of a method for obtaining information of a user.
FIGS. 5A and 5B illustrate examples of obtaining information of a user through an electronic device.
FIGS. 6A to 6E illustrate examples of obtaining information on a surrounding environment through an electronic device.
FIG. 7 illustrates an example of providing notification information for each object according to user information.
FIG. 8 illustrates a flowchart illustrating an example of identifying a risk level of an object based on a state of a surrounding environment of the electronic device.

### [Mode for Invention]

Terms used in the present disclosure are used only to describe a specific embodiment and may not be intended to limit the scope of another embodiment. A singular expression may include a plural expression unless it is clearly meant differently in the context. The terms used herein, including a technical or scientific term, may have the same meaning as generally understood by a person having ordinary knowledge in the technical field described in the present disclosure. Terms defined in a general dictionary among the terms used in the present disclosure may be interpreted with the same or similar meaning as a contextual meaning of related technology, and unless clearly defined in the present disclosure, it is not interpreted in an ideal or excessively formal meaning. In some cases, even terms defined in the present disclosure cannot be interpreted to exclude embodiments of the present disclosure.

In various embodiments of the present disclosure described below, a hardware approach is described as an example. However, since the various embodiments of the present disclosure include technology that use both hardware and software, the various embodiments of the present disclosure do not exclude a software-based approach.

A term referring to the configuration of the device (e.g., processor, camera, display, module, and the like), a term for operational states (e.g., step, operation, procedure), a term referring to a signal (e.g., signal, information, and the like), and a term for referring to data (e.g., parameter, value, and the like) used in the following description are illustrated for convenience of description. Accordingly, the present disclosure is not limited to terms described below, and another term having an equivalent technical meaning may be used.

In addition, in the present disclosure, in order to determine whether a specific condition is satisfied or fulfilled, an expression of more than or less than may be used, but this is only a description for expressing an example and does not exclude description of more than or equal to or less than or equal to. A condition described as 'more than or equal to' may be replaced with ' more than', a condition described as 'less than or equal to' may be replaced with 'less than', and a condition described as 'more than or equal to and less than' may be replaced with 'more than and less than or equal to'. In addition, hereinafter, 'A' to 'B' means at least one of elements from A (including A) and to B (including B).

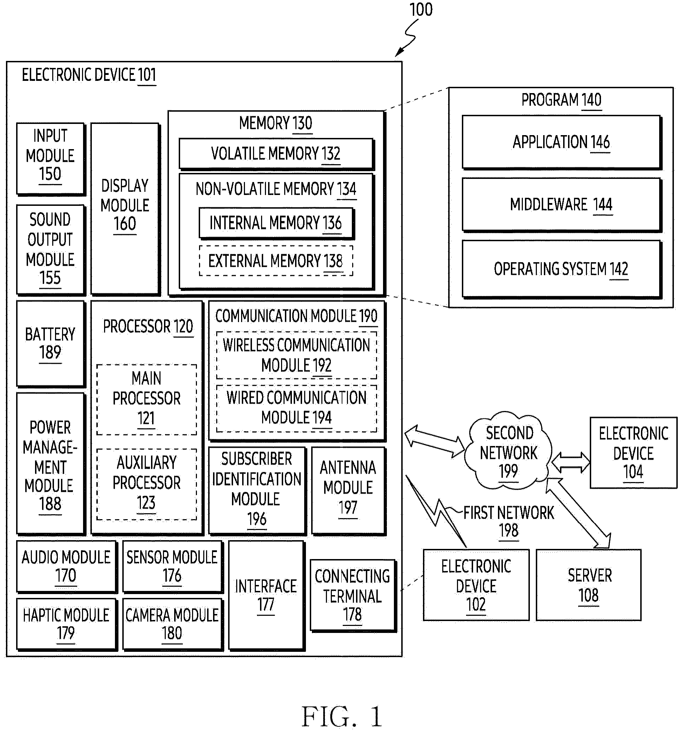

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected operational or environmental state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

An augmented reality (AR) is a technology that synthesizes an arbitrary object or information for a real object to make the synthesized arbitrary object or information look like an object existing in the original environment. An electronic device for the AR may augment and provide information based on the real object. For example, the electronic device may include AR glasses to provide information to a user based on the real object. In this case, the electronic device may be referred to as a wearable electronic device.

In an AR environment, a user wearing the AR glasses may perform various experiences. In addition, the AR glasses may obtain physical capability information of the user. For example, the physical capability information of the user may include body information such as iris information, face information, hand information, and the like. The physical capability information of the user may be obtained through a sensor such as a 2 dimension (2D) image camera, a 3 dimension (3D) depth camera, an IR camera, and the like. The electronic device such as the AR glasses may perform interaction with the user, thereby obtaining the physical capability information of the user based on the response of the user. The electronic device may provide the user with information generated based on humanfriendly interactions such as hand movement, eye movement, face movement, and the like.

In case of performing a hobby, driving, or concentrated and repeated task, the user needs to be notified of an unexpected or dangerous situation. The electronic device may detect danger that may be applied to the user based on information related to the user (e.g., the physical capability information of the user) and may provide a notification. For example, a vehicle driven by the user may provide guidance by tracking the user's gaze or detecting drowsiness. In addition, an medical electronic device may identify cognitive ability through interaction with the user and may provide information for health management. However, the vehicle or the medical electronic device do not provide differentiated information for each user based on the physical capability information of the user (or the cognitive ability of the user). Hereinafter, in various embodiments of the present disclosure, in order to provide an effective AR experience for each user, the electronic device and the method for providing the notification based on the physical capability information of the user (hereinafter, the notification providing device and method for each user) is proposed.

Hereinafter, for convenience of description, it is described through a video see-through (VST) method that generates and provides new information about the actual environment shown through the camera. However, the present disclosure is not limited thereto. Various embodiments of the present disclosure may also be applied to an optical see-through (OST) method that adds and provides information generated in an environment that is actually visible.

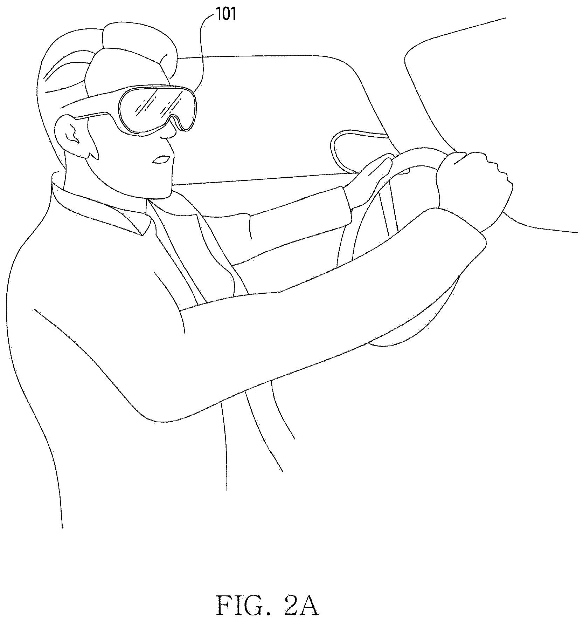

FIG. 2A illustrates an example of providing an augmented reality (AR) environment through an electronic device. In FIG. 2A, a glasses-shaped electronic device 101 (e.g., AR glasses) for providing the AR environment is exemplified, but the present disclosure is not limited thereto. Various embodiments of the present disclosure may be applied to all electronic devices capable of providing the AR environment. For example, the electronic device may include a mask capable of providing the AR environment, a lens capable of providing the AR environment, and the like. In addition, the electronic device 101 may be worn on a user's body and may be referred to as a wearable device.

Referring to FIG. 2A, the electronic device 101 may be used to receive information while the user performs various experiences. For example, the electronic device 101 may provide additional information or notifications based on the user's reaction speed, for unexpected or dangerous situations that occur while the user is performing activities such as driving, exercising, and the like. In this case, the user's reaction speed may mean the time it takes for the user from the moment when a specific situation (e.g., the unexpected situation or the dangerous situation) occurs to the occurrence of the response of the user. Taking driving as an example, objects that are dangerous to the user may vary according to physical capability information of the user (or cognitive ability). The electronic device 101 may provide information that may be a risk factor to a user with poor physical capability information more quickly than a user with good physical capability information. In addition, taking skiing as an example, the electronic device 101 may provide a course according to the physical capability information of the user.

According to the above-described, the information provided by the electronic device 101 and a timing of providing the information may vary for each user. The electronic device 101 may provide a user-customized AR environment to the user. For example, the electronic device 101 may adjust a playback frequency of a user interface (UI) provided through a display. The electronic device 101 may adjust the size of information provided through the display. Accordingly, the electronic device 101 may improve power consumption of the electronic device 101 by providing a user-customized UI/user experience (UX) that adjusts the input range for the response of the user.

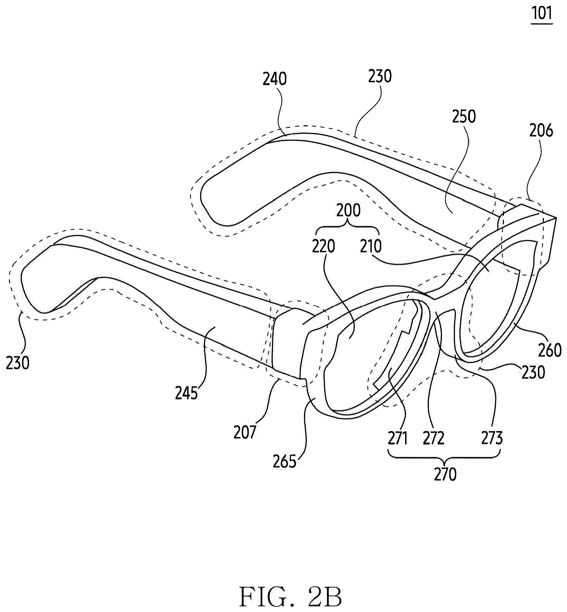

FIG. 2B illustrates an example of an electronic device providing an augmented reality (AR) environment. In FIG. 2B, a glasses-shaped electronic device 101 (e.g., AR glasses) for providing the AR environment is exemplified, but the present disclosure is not limited thereto. Various embodiments of the present disclosure may be applied to all electronic devices capable of providing the AR environment. For example, the electronic device may include a mask capable of providing the AR environment, a lens capable of providing the AR environment, and the like. In addition, the electronic device 101 may be worn on a user's body and may be referred to as a wearable device.

Referring to FIG. 2B, the electronic device (e.g., the electronic device 101 of FIG. 1) includes a memory (e.g., a memory 130 of FIG. 1) configured to store instructions, at least one display 200, a frame 240 supporting at least one display 200, and a processor (e.g., a processor 120 of FIG. 1).

According to an embodiment, the electronic device 101 may be referred to as the wearable device that is worn on a part of the user's body. The electronic device 101 may provide augmented reality (AR), virtual reality (VR), or mixed reality (MR) that combines augmented reality and virtual reality to a user wearing the electronic device 101. For example, the electronic device 101 may display a virtual reality image provided by at least one optical device on the at least one display 200 in response to a user's designated gesture obtained through a motion recognition camera.

According to an embodiment, the memory stores instructions executed by the processor. The instructions stored in the memory may be related to a designated function of the electronic device 101. For example, the memory may store instructions related to an operation of a photoplethysmogram (PPG) sensor, at least one microphone. In case that the instruction is loaded by the processor, the processor may control the electronic device 101 to perform the designated operation in the instruction.

According to an embodiment, the at least one display 200 may provide visual information to the user. For example, the at least one display 200 may include a transparent or translucent lens. The at least one display 200 may include a first display 210 and/or a second display 220 spaced apart from the first display 210. For example, the first display 210 and the second display 220 may be disposed at positions corresponding to the user's left and right eyes, respectively.

Referring to FIG. 2B, the at least one display 200 may provide the visual information transmitted from external light to the user through the lens included in the at least one display 200 and other visual information distinct from the visual information. For example, the at least one display 200 may include a first surface close to the user in case of being worn by the user, and a second surface opposite to the first surface, and may have a display area on the first surface. When the user wears the electronic device 101, the external light may be transmitted to the user by being incident on the second surface and being transmitted through the first surface. For another example, the at least one display 200 may display an augmented reality image combined with a virtual reality image provided from the at least one optical device on a reality screen transmitted through the external light on the display area on the first surface. The at least one display 200 may include at least one waveguide that diffracts light transmitted from the at least one optical device and transmits it to the user. The electronic device 101 may analyze an object included in a real image collected through a photographing camera (not illustrated), combine a virtual object corresponding to an object to be provided with augmented reality among the analyzed objects, and display it on the at least one display 200. The virtual object may include at least one of text and images for various information related to the object included in the real image. The user wearing the electronic device 101 may watch an image displayed on the at least one display 200.

According to an embodiment, the frame 240 may have a physical structure in which the electronic device 101 may be worn on the user's body. According to an embodiment, the frame 240 may be configured so that when the user wears the electronic device 101, the first display 210 and the second display 220 may be positioned corresponding to the user's left and right eyes.

The frame 240 may support the at least one display 200. For example, the frame 240 may support the first display 210 and the second display 220 to be positioned at positions corresponding to the user's left and right eyes.

Referring to FIG. 2B, the frame 240 may include an area 230 in which at least a part of the frame 240 in contact with a part of the user's body in case that the user wears the electronic device 101. For example, the area 230 of the frame 240 in contact with a part of the user's body may include an area contacting a part of the user's nose, a part of the user's ear, and a part of the side of the user's face that the electronic device 101 contacts. According to an embodiment, the frame 240 may include a nose pad 270 in contact with a part of the user's body. When the electronic device 101 is worn by the user, the nose pad 270 may contact a part of the user's nose. The frame 240 may include a first temple 250 and a second temple 245 that are in contact with another part of the user's body that is distinct from the part of the user's body.

For example, the frame 240 may include a first rim 260 surrounding at least a part of the first display 210, a second rim 265 surrounding at least a part of the second display 220, a bridge 272 disposed between the first rim 260 and the second rim 265, a first pad 273 disposed along a part of the edge of the first rim 260 from one end of the bridge 272, a second pad 271 disposed along a part of the edge of the second rim 265 from the other end of the bridge 272, the first temple 250 extending from the first rim 260 and fixed to a part of the wearer's ear, and the second temple 245 extending from the second rim 265 and fixed to a part of an ear opposite to the above ear. The first pad 273 and the second pad 271 may be in contact with a part of the user's nose, and the first temple 250 and the second temple 245 may be in contact with a part of the user's face and a part of the user's ear. The templates 250 and 245 may be rotatably connected to the rim through a hinge unit. The first temple 250 may be rotatably connected to the first rim 260 through a first hinge unit 206 disposed between the first rim 260 and the first temple 250. The second temple 245 may be rotatably connected to the second rim 265 through a second hinge unit 207 disposed between the second rim 265 and the second temple 245.

The processor, according to an embodiment, may be referred to the processor described above. In an embodiment, the processor may be mounted on the frame 240 included in the electronic device 101. The processor may control the operation of the electronic device 101 by executing instructions stored in the memory. For example, the processor may control the at least one display 200.

According to an embodiment, the electronic device 101 may include electronic components that perform various functions. For example, the electronic components may include a battery module, an antenna module, the at least one optical device, a sound output module, a light emitting module, and/or a printed circuit board. Various electronic components may be disposed in frame 240 to perform the designated function.

According to an embodiment, the at least one optical device may project the virtual object on the at least one display 200 in order to provide various image information to the user. For example, the at least one optical device may be a projector. The at least one optical device may be disposed adjacent to the at least one display 200 or may be provided as a part of the at least one display 200. According to an embodiment, the electronic device 101 may include a first optical device corresponding to the first display 210 and a second optical device corresponding to the second display 220. For example, the at least one optical device may include the first optical device disposed at the edge of the first display 210 and the second optical device disposed at the edge of the second display 220. The first optical device may transmit light to a first waveguide disposed on the first display 210, and the second optical device may transmit light to a second waveguide disposed on the second display 220.

In various embodiments, the electronic device 101 may include the camera. The camera may include the photographing camera, an Eye Tracking Camera (ET CAM), and/or the motion recognition camera. The photographing camera, the Eye Tracking Camera (ET CAM), and the motion recognition camera may be disposed at different positions on the frame 240 and may perform different functions.

The photographing camera may photograph an actual image or background to be matched with a virtual image in order to implement augmented reality or mixed reality content. The photographing camera may photograph an image of a specific object existing at a position viewed by the user and may provide the image to the at least one display 200. The at least one display 200 may display one image in which information about the actual image or background including an image of the specific object obtained using the photographing camera and a virtual image provided through the at least one optical device overlap. In an embodiment, the photographing camera may be disposed on a bridge disposed between the first rim 260 and the second rim 265.

By tracking the gaze of the user wearing the electronic device 101, the Eye Tracking Camera (ET CAM) may match the gaze of the user with the visual information provided on the at least one display 200 to implement more realistic augmented reality. For example, when the user looks at the front, the electronic device 101 may naturally display environment information related to the user's front on the at least one display 200 at the place where the user is positioned. The Eye Tracking Camera (ET CAM) may be configured to capture an image of the user's pupil in order to determine the gaze of the user. For example, the Eye Tracking Camera (ET CAM) may receive gaze detection light reflected from the user's pupil and may track the gaze of the user based on the position and movement of the received gaze detection light. In an embodiment, the Eye Tracking Camera (ET CAM) may be disposed at a position corresponding to the user's left and right eyes. For example, the Eye Tracking Camera (ET CAM) may be disposed in the first limb 260 and/or the second limb 265 to face a direction in which a user wearing the electronic device 101 is positioned.

The motion recognition camera may provide a specific event to the screen provided on the at least one display 200 by recognizing the movement of the entire or part of the user's body, such as the user's torso, hand, or face, and the like. The motion recognition camera may obtain a signal corresponding to the gesture by recognizing the user's gesture and may provide the at least one display 200 with a display corresponding to the signal. The processor may identify the signal corresponding to the gesture and may perform the designated function based on the identification. In an embodiment, the motion recognition camera may be disposed on the first rim 260 and/or the second rim 265.

According to an embodiment, the battery module may supply power to the electronic components of the electronic device 101. The battery module may be referred to as the battery described above (e.g., a battery 189 of FIG. 1). In an embodiment, the battery module may be disposed in the first temple 250 and/or the second temple 245. For example, the battery module may be a plurality of battery modules. The plurality of battery modules may be disposed on the first temple 250 and the second temple 245, respectively. In an embodiment, the battery module may be disposed at an end of the first temple 250 and/or the second temple 245.

The antenna module may transmit a signal or power to the outside of the electronic device 101 or may receive a signal or power from the outside. The antenna module may be referred to as the antenna module described above (e.g., an antenna module 197 of FIG. 1). In an embodiment, the antenna module may be disposed in the first temple 250 and/or the second temple 245. For example, the antenna module may be disposed close to one surface of the first temple 250 and/or the second temple 245.

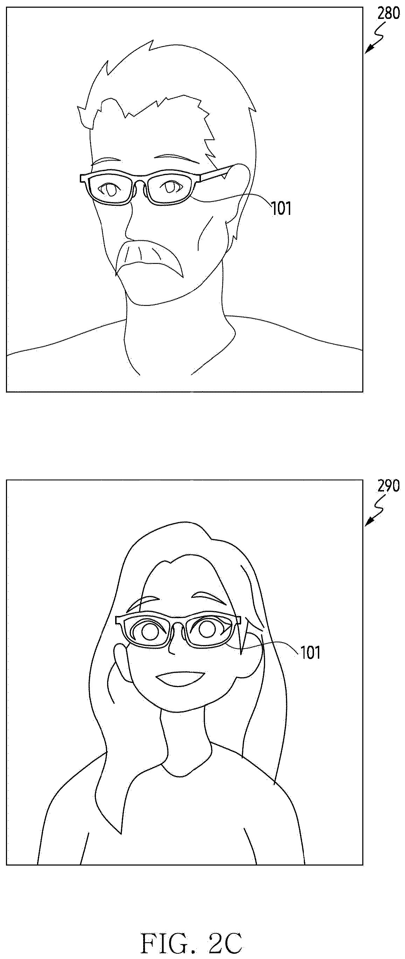

FIG. 2C illustrates an example of providing a different augmented reality (AR) environment according to information of a user. Here, the information of the user may be defined as physical capability information of the user or recognition capability of the user. In FIG. 2C, the information of the user means the user's age, but the present disclosure is not limited thereto. The information of the user may include not only the user's age, but also gender, reaction speed, and body information (e.g., height, arm length, and the like).

Referring to FIG. 2C, FIG. 2C illustrates a first example 280 in which the age of the user of the electronic device 101 is relatively large and a second example 290 in which the age of the user of the electronic device 101 is relatively young. Here, the relatively large age of the user may mean that the level of the physical capability information of the user is low. In addition, the relatively young age of the user may mean that the level of the physical capability information of the user is high.

Referring to the first example 280 and the second example 290, the electronic device 101 may provide information that may be a risk factor to the user with the low level of physical capability information faster than the user with the high level of the physical capability information. In case that the recognition capability of the user (e.g., recognition speed, reaction speed) is low as in the first example 280, the electronic device 101 may provide information faster than a case in which the recognition capability of the user is high as in the second example 290. In addition, the electronic device 101 may provide the user of the first example 280 with more specific information than the user of the second example 290. The electronic device 101 may vary information provided for each user and timing for providing the information.

According to an embodiment, the electronic device 101 may provide a user-customized AR environment to the user. For example, the electronic device 101 may adjust a playback frequency of a user interface (UI) provided through a display. The electronic device 101 may adjust the size of information provided through the display. In addition, the electronic device 101 may improve power consumption of the electronic device 101 by providing a user-customized UI/user experience (UX) that adjusts the input range for the response of the user.

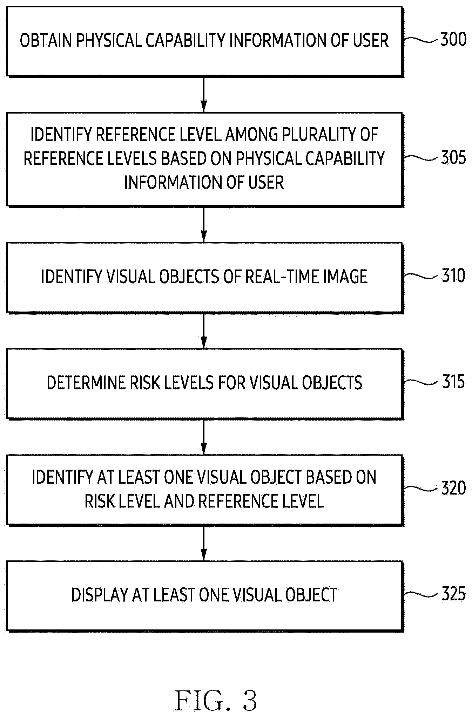

FIG. 3 illustrates a flowchart illustrating an example of a method for providing notification information according to information of a user. Here, the method for providing the notification information may be performed by an electronic device 101 of FIG. 1. In addition, the user may mean a person who wears and uses the electronic device 101.

Referring to FIG. 3, in operation 300, an electronic device obtains physical capability information of the user. Here, the physical capability information of the user may be referred to as recognition capability of the user. The physical capability information of the user and the recognition capability of the user may include information for identifying the agility of the user.

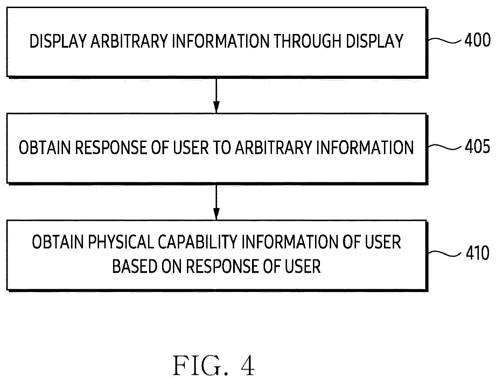

According to an embodiment, the physical capability information of the user may include a user's reaction speed or a movable range of the user's body. For example, the user's reaction speed may include the reaction speed of the user's eyeball (e.g., iris, and the like) or the reaction speed of the user's body (e.g., fingers, palm, arm, and the like). The movable range of the user's body may mean a movement range of the user's eyeball (e.g., iris, and the like) or a movement range of the user's body (e.g., fingers, palm, arm, and the like). Here, the movement range may mean a range in an environment shown to the user through an electronic device worn by the user. According to an embodiment, the electronic device may obtain the physical capability information of the user through interaction with the user. Specific details related to this are described in FIGS. 4 to 5B below.

In operation 305, the electronic device identifies one reference level among a plurality of reference levels based on the physical capability information of the user. Here, the one reference level is a reference level for the user, and the plurality of reference levels may mean dividing the physical capability information of the user into a plurality of steps in order to distinguish the users. For example, the plurality of reference levels may include levels 1 to N (Here, N is an integer greater than 1). The lower the reference level, the lower the level of the physical capability information of the user may be, and the higher the reference level, the higher the level of the physical capability information of the user may be. This is just an example, and the lower the reference level, the higher the level of the physical capability information of the user may be. Here, the N value may be determined according to the AR environment provided through the electronic device. For example, in case of an AR environment that is sensitive to the user, the N may be set to a large value, and the electronic device may more specifically distinguish the user. In contrast, in case of an AR environment that is not sensitive to the user, the N may be set to a low value, and the electronic device may more approximately distinguish users.

According to an embodiment, the electronic device may identify one reference level for physical capability information of the current user among a plurality of predetermined reference levels based on the obtained physical capability information. The electronic device may identify the reference level for each physical capability information. For example, the reference level for the reaction speed of the user's eyeball may be identified as 2, and the reference level for the reaction speed of the user's body may be identified as 3. In addition, the reference level for the movable range of the user's body may be identified as 4.

According to an embodiment, the electronic device may identify the representative reference level of the physical capability information of the user based on the representative value of the reference level for each piece of the physical capability information. Here, the representative reference level may be one identified reference level among the plurality of reference levels. The representative value may include a maximum value, a minimum value, an average value, and an intermediate value. For example, the electronic device may identify the minimum reference level (i.e., the lowest physical capability information) as the user's representative reference level. In addition, the electronic device may identify 3 which is the average value as the representative reference level in the above-described example (in case that the reference level for eyeball reaction speed is 2, the reference level for body reaction speed is 3, and the reference level for the movable range of the body is 4).

According to an embodiment, the electronic device may store the reference levels or the representative reference level identified for each physical capability information of the user. For example, the electronic device may store the reference levels or the representative reference level obtained through measurement and calculation by a processor in a memory.

In operation 310, the electronic device may identify visual objects of the real-time image. The electronic device may display the surrounding environment (e.g., space) of the electronic device as an image to the user through the display of the electronic device. The image of the surrounding environment may mean the real-time image. In FIG. 3, for convenience of description, it is assumed that the electronic device is a video see through (VST), and the real-time image may represent a virtual image of the surrounding environment. However, the embodiment of the present disclosure is not limited thereto. For example, in case that the electronic device is an optical see through (OST), the real-time image may represent an actual image shown by passing through the display (e.g., the display 200 of FIG. 2B) of the electronic device. The visual object may mean an object shown in the real-time image. In other words, the visual object may include a virtual object included in the virtual image or an actual object included in the actual image.

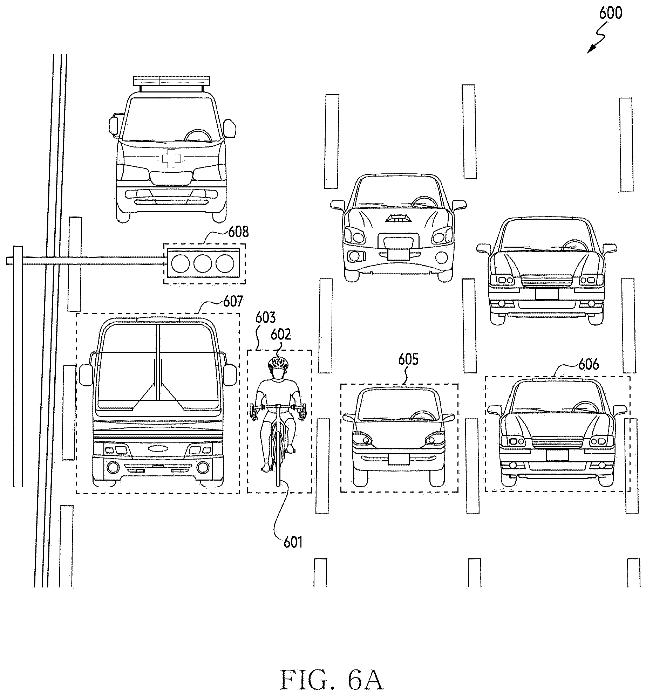

According to an embodiment, the electronic device may identify objects in the surrounding environment based on input signals. For example, the input signals may include an input of an red-green-blue (RGB) camera, an IR camera, a depth camera, and a stereo camera. The electronic device may analyze and identify how the surrounding environment is configured on 3 dimensional (3D) coordinates based on the input signal. Specific details of the information of the surrounding environment analyzed based on the input signal are described in FIGS. 6A to 6E below. In FIG. 3, the operation 310 is illustrated as being performed sequentially with respect to the operation 305, but the present disclosure is not limited thereto. The operation 310 may also be performed before, after, or during the operation 300 of obtaining the physical capability information of the user and the operation 305 of identifying the reference level.

In operation 315, the electronic device determines risk levels for each of the visual objects. The visual objects are visual objects identified in the operation 310. Here, the risk level may be one of a plurality of risk levels. For example, the risk levels may include levels from 1 to M (M is an integer greater than 1). The lower the risk level, the lower the risk of the object may be, and the higher the risk level, the higher the risk of the object may be. This is just an example, and the lower the risk level, the higher the risk of the object may be. Here, the M value may be determined according to an AR environment provided through the electronic device.

According to an embodiment, the risk level of the visual object may be determined based on information obtained from an image of the surrounding environment. For example, the risk level is determined based on a configuration of an object, a movement of the object, or a state of space and the like in the image of the surrounding environment. For example, the risk level for the visual object may be determined according to whether the object approaches the user. In case that the object approaches the user, the risk level of the object may increase. In addition, the risk level for the visual object may be determined according to the configuration of the object. In case that the configuration of the object includes a bicycle and a person, the electronic device identifies the object as a person riding a bicycle rather than a person or a bicycle, and accordingly, the risk level of the object may be identified.

According to an embodiment, the risk level for the visual object may be determined based on the risk level for the visual object in the image of the previous time of the current image (i.e., the real-time image). For example, in case that the situation does not change in consideration of the difference between the previous time image and the current image, the risk level of the visual object in the current image may be determined as the risk level of the visual object in the previous time image. Even in case that the situation changes in consideration of the difference between the previous time image and the current image, the risk level of the visual object in the current image may be determined as a high-risk level in consideration of the risk level of the visual object in the previous time image. Accordingly, the electronic device may accurately identify the risk level for objects in the image of the surrounding environment. Accuracy of identifying the risk level of the visual object may be increased.

In operation 320, the electronic device identifies at least one visual object among the visual objects based on the risk level and the reference level. Here, the risk level means the risk level identified in operation 315 and the reference level means the reference level identified in operation 305. According to an embodiment, the electronic device may identify the at least one visual object by comparing the risk level with the reference level. For example, in case that the reference level is X, the electronic device identifies at least one visual object having the risk level greater than or equal to X.

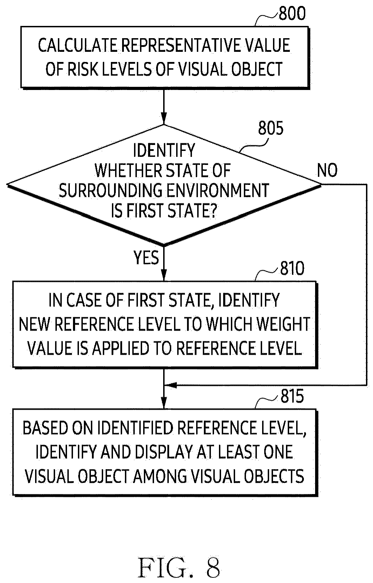

Alternatively, in case that the reference level is X, the electronic device may identify at least one visual object having the risk level greater than or equal to X*w. Here, w may mean a weight value. According to an embodiment, the w may be determined according to the AR environment. For example, in case of an AR environment in which the user is involved in extreme sports, the space for extreme sports may have a lower risk of an object than a general space, so the w may be a value which is greater than 1. On the other hand, in case of an AR environment related to an environment that is unfamiliar to the user, the risk of the object in the unfamiliar environment may be higher than that of objects in an environment familiar to the user, so the w may be a value which is lower than 1. Accordingly, the electronic device may provide specific information to a user positioned in an unfamiliar space. In addition, in case of an AR environment related to sports such as basketball, soccer, and the like, an object such as a basketball or a soccer ball may be an object for the AR environment to be provided. Accordingly, the electronic device may not identify the risk level for the object such as the basketball or the soccer ball, and may not provide a separate notification for this. According to an embodiment, in case of an AR environment preset by the user, the electronic device 101 may identify the at least one visual object based on the reference level to which the weight value is applied. Alternatively, the electronic device 101 may identify the at least one visual object based on the reference level to which the weight value is applied, according to the state of the surrounding environment. Specific details related to this are described in FIG. 8.

In operation 325, the electronic device visually highlights and displays the identified at least one object. Here, visually highlighted may mean that information or notification for at least one object is visually added. For example, the information or notification for at least one object may include speed of the object, movement direction of the object, state of the object, and a notification message for notifying risk and degree of the risk. According to an embodiment, in case that the at least one object is identified, the electronic device may obtain information for the at least one object. In addition, the electronic device may display information for the at least one object so as to be visually highlighted on the at least one object. Accordingly, the user may easily identify at least one visually highlighted object compared to objects that are not.

Although not illustrated in FIG. 3, the electronic device may provide an image including the at least one visually highlighted object to the user through the display of the electronic device. Here, providing to the user through the display may mean displaying an image in which the at least one object is highlighted. For example, the electronic device may display a real-time image in which the information for the at least one object is added to the real-time image of the operation 310 through the display.

According to an embodiment, displaying the information for the at least one object through the display may be determined based on the physical capability information of the user, the risk level of the object, or the state of the space. For example, based on the physical capability information of the user, the information for the at least one object may be enlarged or reduced and displayed. In addition, based on the risk level of the object, information for at least one object may be enlarged or reduced and displayed. In addition, based on the state of the space, the time for displaying the information for the at least one object may increase, or the period for displaying the information for the at least one object may be shortened.

According to the above-described, the electronic device may identify a reference level for the agility of the user from among a plurality of reference levels based on the physical capability information of the user (or cognitive ability). In addition, the electronic device may obtain information about objects from the image of the user's surrounding environment and may identify the risk level for the objects. Based on the identified reference level and the risk level, at least one object among objects in the environment may be identified and visually highlighted and displayed. At this time, the electronic device may visually highlight and display the at least one object by adding the information for the at least one object. The electronic device may provide the user with the image in which the at least one object is visually highlighted through the display. In other words, the electronic device may provide notification information for each user by identifying the risk level for each object for each user and providing information on some objects. Accordingly, the user may experience a more effective AR environment.

FIG. 4 illustrates a flowchart illustrating an example of a method for obtaining information of a user. A flowchart of the method for obtaining the information of the user of FIG. 4 may mean a specific operation of the operation 300 of FIG. 3. Accordingly, the method for obtaining the information of the user may be performed by an electronic device 101 of FIG. 1. Here, the information of the user may include physical capability information of the user or recognition capability of the user. The user's information may refer to information for identifying agility of the user.

In operation 400, the electronic device may display arbitrary information through a display. According to an embodiment, the arbitrary information may include information for interaction between the electronic device and the user. For example, the arbitrary information may mean a virtual object distinct from the objects included in the image of the surrounding environment, or some of the objects included in the image of the surrounding environment. In addition, the arbitrary information may include an interface displayed in case that the user first uses the electronic device or in case that the electronic device is reset and needs calibration according to the user. The arbitrary information may include content about an AR environment experienced by the user through the electronic device. For example, when the user is playing a game through the AR environment, the arbitrary information may be a character of the game. Alternatively, in case that the user executes the content through the AR environment, the arbitrary information may include a system alarm for execution, and the like.

In operation 405, the electronic device may obtain a response of the user to displayed arbitrary information. According to an embodiment, the electronic device may identify and obtain the response of the user to the arbitrary information through a sensor, and the like. For example, the electronic device may use the sensor to obtain movement information (e.g., reaction speed or movable range) of the user's eyeball or body, thereby identifying that it is the response of the user to the arbitrary information. In case that the response of the user to the displayed information is identified, the electronic device may store information related to the response of the user.

In operation 410, the electronic device may obtain the physical capability information of the user based on the response of the user. According to an embodiment, the electronic device may obtain a difference between a time when the arbitrary information is displayed and a time when the response of the user is received through the display. The time from the time when the arbitrary information is displayed to the time when the response of the user is received may be referred to as the reaction speed. For example, the reaction speed of the user's eyeballs may be the time taken from when the arbitrary information is generated in the display until the focus of the user's eyeballs moves to indicate the arbitrary information. In addition, the reaction speed of the user's body may be the time taken from when the arbitrary information is generated in the display until the user's body moves to perform feedback on the arbitrary information. Here, the feedback may include an input of the arbitrary information by the user identified by the sensor of the electronic device.

According to an embodiment, the electronic device may obtain information on whether the response of the user to arbitrary information is displayed through the display. The response of the user to arbitrary information may indicate the movable range of the user's eyeball or body. For example, the electronic device may identify information that is not positioned in a certain range from the focus of the user's eyeballs among arbitrary pieces of information displayed through the display. Accordingly, the electronic device may identify a range that the user's eyeball may recognize. In addition, the electronic device may identify a movement range of the user's body based on the user's body information and the user's position among arbitrary pieces of information displayed through the display.

Although not illustrated in FIG. 4, the electronic device may identify one reference signal among a plurality of reference levels for the agility of the user based on the obtained physical capability information of the user. In this case, the electronic device may identify the reference level for each physical capability information of the user or may identify a representative reference level for the reference levels of the physical capability information. The representative reference level may be determined based on a representative value for the reference levels of the physical capability information.

According to an embodiment, the electronic device may obtain the physical capability information of the user based on a response to arbitrary information displayed at a specific timing and a response to arbitrary information displayed at another timing. For example, the electronic device may obtain the physical capability information of the user based on the response to the initial interface for the user's registration at the first timing and the response of the user to AR content at the second timing. Accordingly, the electronic device may obtain more accurate physical capability information of the user.

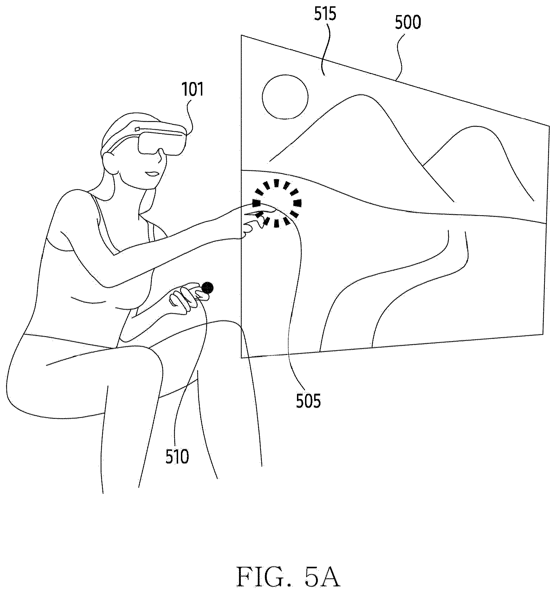

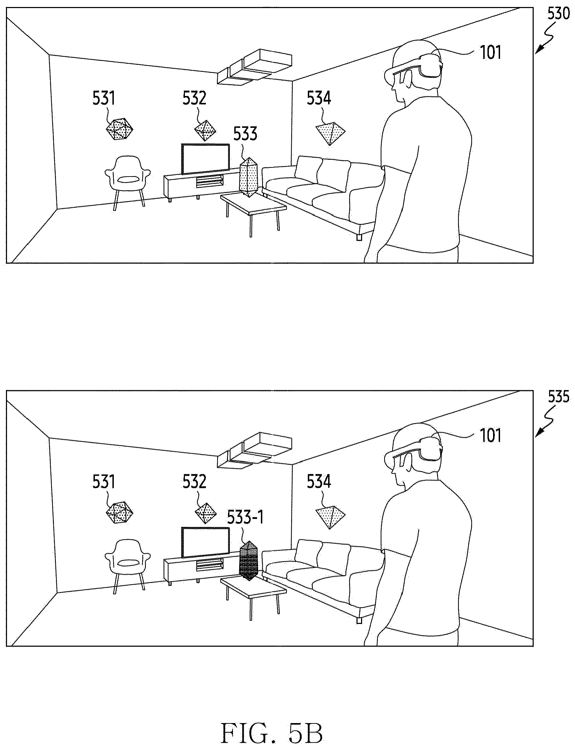

FIGS. 5A and 5B illustrate examples of obtaining information of a user through an electronic device. An electronic device 101 of FIGS. 5A and 5B may be understood as the same as the electronic device 101 of FIG. 1. Here, the information of the user may include physical capability information of the user or recognition capability of the user. The user's information may refer to information for identifying agility of the user.

The method of obtaining the user's information by the electronic device 101 may include a method of manually obtaining and a method of automatically obtaining. Here, the criteria for distinguishing manual and automatic may vary depending on whether an event is needed to obtain the user's information. For example, the manual may mean a case in which an event is needed to obtain user's information, and the automatic may mean a case in which an event is not needed. FIG. 5A illustrates a case 500 in which the electronic device 101 automatically obtains user's information, and FIG. 5B illustrates a case 530 and 535 in which the electronic device 101 manually obtains user's information.

In the case 500 of automatically obtaining the user's information in FIG. 5A, the user may wear the electronic device 101 and may perform content in an AR environment. For example, the user may play the game through the electronic device 101, and the game screen 515 may be displayed through the display of the electronic device 101. The user may perform feedback through the user's body 505 in response to the game screen 515. Alternatively, the user may input a response to the game screen 515 through another device 510 connected to the electronic device 101. As described above, the electronic device 101 may obtain the physical capability information of the user by tracking the movement of the user's body or the movement of the user's eyeball and analyzing AR content such as the game screen 515 and actual environment.

In addition, in case that the user executes the AR content such as reading or watching a movie through the electronic device 101, the physical capability information of the user may be obtained by tracking the response to the alarm required at the time of execution. The example of FIG. 5A may be an example of automatically obtaining the user's information by obtaining the physical capability information of the user based on the information displayed while the user is enjoying the AR content and a response thereto.

On the other hand, in the case 530 and 535 of manually obtaining the user's information in FIG. 5B, the user may wear the electronic device 101 and may respond to arbitrary information for obtaining the user's information in the AR environment. For example, the electronic device 101 may display an image to which a first information 531, a second information 532, a third information 533, and a fourth information 534 are added to the user. In order to obtain the response of the user, the electronic device 101 may change the third information 533 to a new third information 533-1 displayed by visually highlighting the third information 533. In other words, the electronic device 101 may visually highlight and display the third information 533 as the new third information 533-1. Thereafter, in case that the user indicates the new third information 533-1, the electronic device 101 may obtain the physical capability information of the user by tracking the response of the user to the new third information 533-1. In the case 530 and 535 of manually obtaining the user's information, it may be a user calibration process, such as using the electronic device 101 for the first time or resetting it. The case of manually obtaining the user's information may also include a case of displaying arbitrary information through the electronic device 101 and measuring a response using the user's eyes or body. At this time, the electronic device 101 may obtain the physical capability information of the user based on various input signals. For example, the electronic device 101 may obtain the physical capability information of the user based on inputs of an RGB camera, an IR camera, a depth camera, and a stereo camera.

FIGS. 6A to 6E illustrate examples of obtaining information on a surrounding environment through an electronic device. An electronic device of FIGS. 6A to 6E may be understood as the same as the electronic device 101 of FIG. 1. Here, the information of the user may include physical capability information of the user or recognition capability of the user. The user's information may refer to information for identifying agility of the user.

Referring to FIGS. 6A to 6E, the electronic device may obtain an image of the surrounding environment of the electronic device and may obtain information on the surrounding environment based on the image. Here, the surrounding environment may mean an area adjacent to the user wearing the electronic device. The image of the surrounding environment may be obtained based on input signals for a camera included in the electronic device. For example, the input signals may include inputs of an RGB camera, an IR camera, a depth camera, and a stereo camera. The information on the surrounding environment may be information on objects included in the 3D coordinate. In other words, the information on the surrounding environment may include 3D information on the real space, and the electronic device may obtain 3D information on the real space from an image on the surrounding environment.

Referring to a first example 600 of FIG. 6A, the electronic device may obtain 2D image information. In the first example 600, the electronic device may obtain a 2D image of a scene viewed by the user through the camera. The 2D image obtained by the electronic device may include a plurality of cars 605 and 606, a bicycle 601, a person 602, a person 603 riding the bicycle, a truck 607, and a traffic signal 608. The electronic device may identify the plurality of cars 605 and 606, the bicycle 601, the person 602, the person 603 riding the bicycle, the truck 607, and the traffic signal 608, based on the obtained 2D image and pre-stored information. In particular, the person 603 riding the bicycle may be identified based on the bicycle 601, the person 602, and the relative position of person 602 with respect to the bicycle 601.

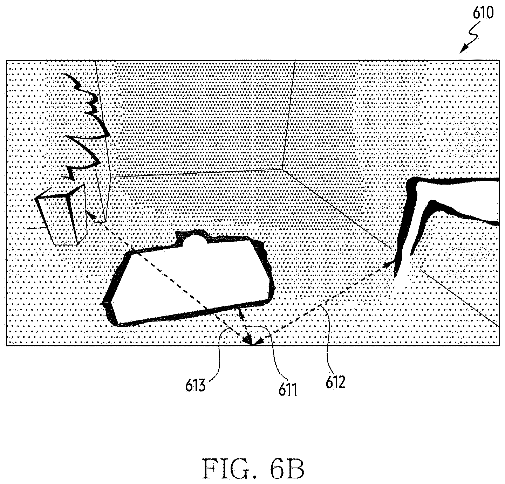

Referring to a second example 610 of FIG. 6B, the electronic device may obtain depth information to the objects in the image through an image obtained from the camera. In the second example 610, the electronic device may obtain the image of the scene viewed by the user through the camera and may obtain the depth information for each object in the image through the sensor of the electronic device. The electronic device may obtain information on a depth 611 from the user's position to a first object, a depth 612 to a second object, and a depth 613 to a third object. The electronic device may calculate the distance from the user to the object based on information on the depth to each object.

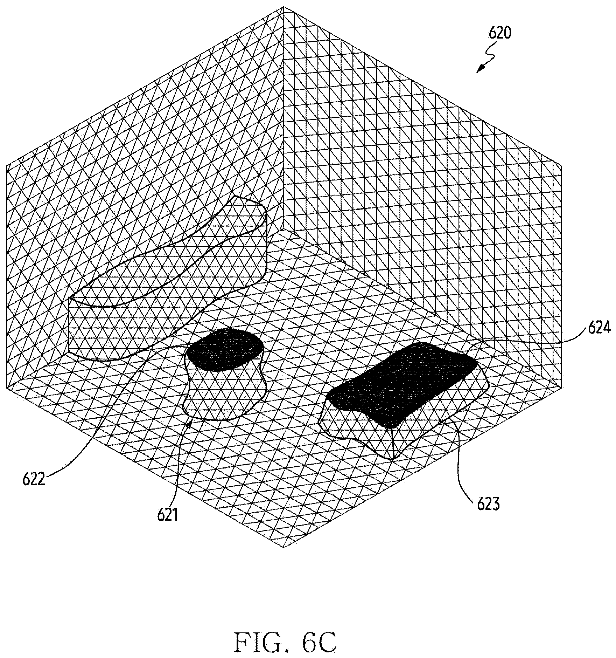

Referring to a third example 620 of FIG. 6C, the electronic device may obtain information on the surface of the objects in the image through the image obtained from the camera. In the third example 620, the electronic device may obtain the image of the scene viewed by the user through the camera and may obtain information on the surface of each of the objects by configuring the objects in the image into a plurality of patterns. Here, the pattern may include a mesh pattern, a point pattern, and the like. The third example 620 illustrates an image configuring a plurality of mesh patterns. The electronic device may identify the surface of each of the objects based on the configuration of the mesh patterns. For example, the electronic device may identify that the top surface of a first object 621 is configured with a circular surface 622. In addition, the electronic device may identify that the top surface of a second object 623 is configured with a rectangular surface 624.

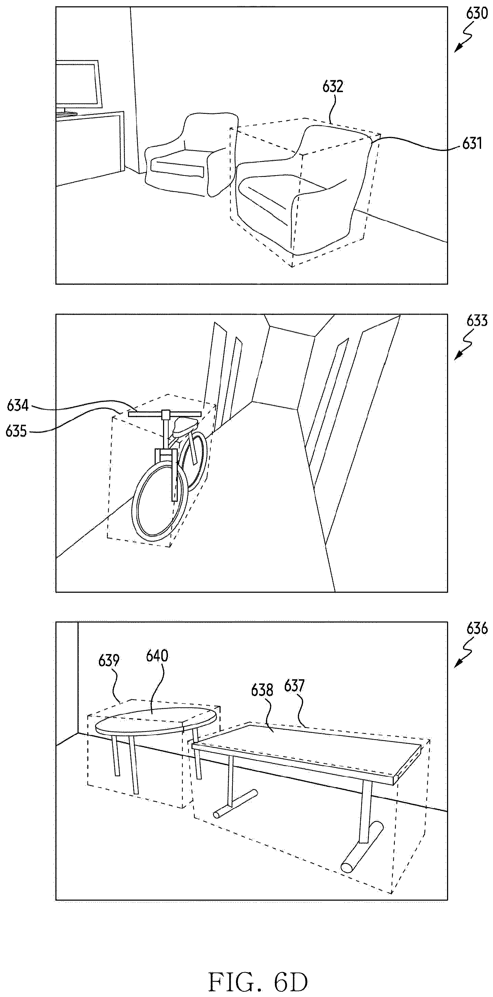

Referring to a fourth examples 630, 633, and 636 of FIG. 6D, the electronic device may obtain coordinate information on the 3D position of objects in the image through the image obtained from the camera. In the fourth examples 630, 633, and 636, the electronic device may obtain the image of the scene viewed by the user through the camera and may identify objects in the image and the 3D position coordinates of the objects. Here, the 3D position coordinates of each object may be obtained by adjusting the object to be positioned in a virtual 3D box (or hexahedron). In the fourth example 630, the electronic device may obtain the 3D position coordinates of a chair 631 through a virtual 3D box 632. In addition, in the fourth example 633, the electronic device may obtain the 3D position coordinates of a bicycle 634 through a virtual 3D box 635. In the fourth example 636, the electronic device may obtain the 3D position coordinates of a long table 638 through a virtual 3D box 637, and the 3D position coordinates of a circular table 640 through a virtual 3D box 639. The fourth examples 630, 633, and 636 may be referred to as a 3D object detection technique.

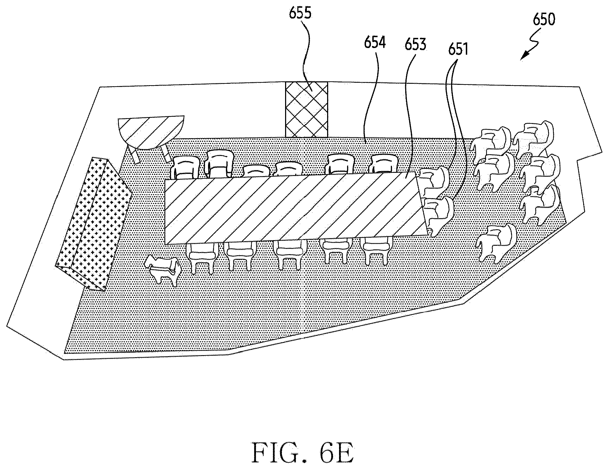

Referring to a fifth example 650 of FIG. 6E, the electronic device may obtain information on objects in the image through the image obtained from the camera. In the fifth example 650, the electronic device may obtain the image of the scene viewed by the user through the camera and may obtain information on the object by configuring objects in the image into 3D patterns. Specifically, the electronic device may identify objects by classifying, detecting(or localization), and segmenting objects in the image. The electronic device may identify an object by dividing an image into 3D pixels and classifying a class according to the number of 3D pixels. In the fifth example 650, the electronic device may identify a plurality of chairs 651, a table 653, a floor 654, and a door 655. The fifth example 650 may be referred to as a 3D semantic segmentation technique.

Referring to FIGS. 6A to 6E, the electronic device may obtain information on the objects in the surrounding environment based on the image displayed through the camera. Here, information on the objects in the surrounding environment may be referred to as information on the image. The electronic device may obtain information for each user's position and object based on the information on the image. Here, the information for each object may obtain the speed of the object, the distance from the object to the user, and the configuration information of the object. Here, the configuration information of the object may include an object configured by a plurality of objects such as the person 603 riding the bicycle of the first example 600 of FIG. 6A, and objects 651 to 655 identified through class classification of the fifth example 650 of FIG. 6E.

In addition, information on each image illustrated in FIGS. 6A to 6E is described as a separate example, but may be obtained in connection with each other. For example, the electronic device may obtain information on the images of the second example 610, the third example 620, the fourth example 630,633,636, and the fifth example 650 based on the image of the first example 600.

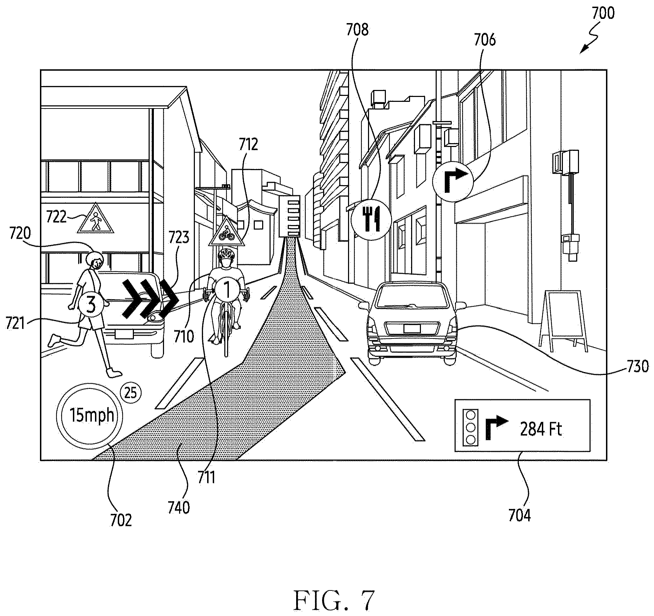

FIG. 7 illustrates an example of providing notification information for each object according to user information. An electronic device of FIG. 7 may be understood as the same as the electronic device 101 of FIG. 1. Here, the object may mean an object in an image of a surrounding environment viewed through a camera of the electronic device. In addition, the notification information may mean additional information generated based on the user's risk level. The risk level may indicate the degree of risk for the user of the electronic device by the object.

Referring to FIG. 7, the electronic device may obtain an image 700 of the surrounding environment viewed by the user. Referring to the image 700, the electronic device may provide various information to the user according to the AR environment. Assume that a user wearing AR glasses and driving is an example. In the image 700, the user may be provided with current speed 702, the moving distance and direction 704 and 706, information 708 about a building, and the moving path 740 through the display of the electronic device.

Referring to the image 700, a first object 710, a second object 720, and a third object 730 may exist in the user's surrounding environment. According to an embodiment, the electronic device may identify objects in the image 700 according to an analysis of the image 700. For example, the electronic device may identify the first object 710 as a person riding a bicycle. The electronic device may identify the second object 720 as a pedestrian. The electronic device may identify the third object 730 as a car.

Referring to the image 700, the electronic device may identify a risk level for each object. For example, the electronic device may identify a risk level 711 of the first object 710 as 1 and a risk level 721 of the second object 720 as 3. According to an embodiment, the electronic device may identify at least one object by comparing the user's reference level and the risk level. For example, as in the image 700, in case that the user's reference level is 1, the first object 710 and the second object 720 may be identified. Accordingly, the electronic device may provide additional information on the first object 710 and the second object 720. For example, the electronic device may provide the user with information that it is riding the bicycle as additional information 712 for the first object 710. In addition, the electronic device may provide the user with information that it is a person moving on foot as additional information 722 for the second object 720. In addition, the electronic device may provide additional information 723 that the second object 720 is moving to the right to the user. If, unlike the image 700, in case that the user's reference level is 2, only the second object 720 may be identified. Accordingly, the electronic device may provide additional information on the second object 720. For example, the electronic device may provide the user with information that it is a person moving on foot as additional information 722 for the second object 720. In addition, the electronic device may provide the additional information 723 that the second object 720 is moving to the right to the user.

Although not illustrated in FIG. 7, the electronic device may provide risk notification information to the user through a phrase. For example, the electronic device may display and provide a phrase such as "Notice: Possible contact with external object" through a partial area of the image 700.

FIG. 8 illustrates a flowchart illustrating an example of identifying a risk level of an object based on a state of a surrounding environment of the electronic device. Here, a method of identifying the risk level of the object based on the state of the surrounding environment may be performed by the electronic device 101 of FIG. 1. Here, the object may mean an object in an image of a surrounding environment viewed through a camera of the electronic device. The risk level may indicate the degree of risk for the user of the electronic device by the object.

Referring to FIG. 8, in operation 800, the electronic device may calculate a representative value of risk levels for visual objects. The representative value may include a maximum value, a minimum value, an average value, and an intermediate value. Assume that the risk levels of the three objects in the image are 1, 2, and 3. For example, the electronic device may calculate 2 which is the average value of the risk levels of the objects, as the representative value. Alternatively, the electronic device may calculate 1 which is the minimum value among the risk levels of the objects, as the representative value.

In operation 805, the electronic device may identify whether the state of the surrounding environment is a first state. According to an embodiment, the electronic device may identify whether the state of the surrounding environment is the first state by comparing a threshold value with the representative value of the risk levels for the visual objects. The first state may mean an unusual state such as an environment for extreme sports. The threshold value may be determined based on physical capability information of the user. For example, in case that the physical capability information of the user is low, the threshold value may be determined to be low. In addition, the threshold value may be preset by the user. For example, the user may preset the electronic device before wearing it. In case that the state of the surrounding environment is identified as the first state, the electronic device may perform step 810. In case that the state of the surrounding environment is identified as a state other than the first state (e.g., a second state), the electronic device may perform step 815.

In step 810, in case that the state of the surrounding environment is the first state, the electronic device may identify a new reference level to which a weight value is applied to the reference level. Assume, a case that the electronic device identifies the reference level for the physical capability information of the user as N, as an example. In case that the state of the surrounding environment is the first state, the electronic device may identify the new reference level for the physical capability information of the user as N*w. The w may mean the weight value. According to an embodiment, the w may be determined according to the AR environment. For example, in case of an AR environment in which the user is involved in extreme sports, the space for extreme sports may have a lower risk of an object than a general space, so the w may be a value which is greater than 1. On the other hand, in case of an AR environment related to an environment that is unfamiliar to the user, the risk of the object in the unfamiliar environment may be higher than that of objects in an environment familiar to the user, so the w may be a value which is lower than 1. Accordingly, the electronic device may provide specific information to a user positioned in an unfamiliar space. In this case, in case of an AR environment related to sports such as basketball, soccer, and the like, an object such as a basketball or a soccer ball may be an object for the AR environment to be provided. Accordingly, the electronic device may identify the state of the space by excluding the risk level for the object such as the basketball or the soccer ball. In addition, the electronic device may not provide a separate notification for the object such as the basketball or the soccer ball.

In step 815, the electronic device may identify at least one visual object among the visual objects based on the identified reference level and may display it through the display. For example, in case that the electronic device identifies that the surrounding environment is in the second state, at least one visual object may be identified and displayed based on the reference level to which the weight value is not applied and the risk level for each object.

In FIG. 8, an embodiment of determining the state of the surrounding environment based on the risk level of objects in the image of the surrounding environment of the electronic device and identifying at least one object to which additional information is to be provided among the objects through the reference level to which the weight value is applied, is described. However, as described above, in the AR environment preset by the user, at least one object may be identified based on the reference level to which the weight value is applied regardless of the risk levels of the objects in the image.

Referring to FIGS. 1 to 8, a device and a method for providing notifications for each user according to embodiments of the present disclosure may provide additional information on some objects based on the physical capability information of the user indicating the agility of the user and the risk of the objects of the surrounding environment. In other words, according to embodiments of the present disclosure, the device and the method for providing the notification for each user may provide a customized AR environment for each user based on the information of the user.

According to various embodiments, a wearable device (101) comprises a camera (180). The wearable device (101) comprises a display (160). The wearable device (101) comprises a processor (120). The processor (120) is configured to identify (305) a reference level corresponding to agility of a user among a plurality of reference levels indicating the agility, based on physical capability information of the user. The processor (120) is configured to identify (310) at least one first visual object in an environment from an image representing the environment around the wearable deice (101), the image obtained through the camera (180). The processor (120) is configured to determine (315) a risk level of the at least one first visual object. The processor (120) is configured to identify (320) at least one second visual object for which a risk level higher than the reference level is determined among the at least one first visual object. The processor (120) is configured to display (325) the at least one second visual object and a visual object for the at least one second visual object.

In one embodiment, the processor (120) is configured to display a virtual object or an interface for initial setup of the wearable device (101) through the display (160). The processor (120) is configured to receive a response of the user for the virtual object or the interface. The physical capability information of the user is determined based on the response of the user.

In one embodiment, the physical capability information of the user includes at least one of eye reaction velocity of the user, body reaction velocity of the user, identifiable range in the image through the eye of the user, or range of motion of body of the user in the environment.

In one embodiment, the processor (120) is further configured to obtain information for the image. The information for the image includes at least one of 2 dimension (2D) information of the image, information for depth of the environment, information for a unit configuring the environment, or 3D position information of the at least one first visual object.

In one embodiment, the processor (120) is further configured to obtain information for each visual object of the at least one first visual object and position information of the user, based on the information for the image. The information for each visual object includes at least one of configuration information of a visual object, distance from a visual object to the user, or velocity of a visual object.

In one embodiment, the risk level is determined for each of the at least one first visual object based on the position information of the user and the information for each visual object.

In one embodiment, the processor (120) is further configured to in response to an average value of the risk level larger than or equal to a threshold value, identify a state of the environment as a first state. The processor (120) is further configured to, in response to the average value of the risk level less than the threshold value, identify the state of the environment as a second state. The at least one second visual object has the risk level higher than the reference level applied a weight value in response to the state of the environment is the first state.

According to various embodiments, a method performed in a wearable device (101) comprises identifying (305) a reference level corresponding to agility of a user among a plurality of reference levels indicating the agility, based on physical capability information of the user. The method comprises identifying (310) at least one first visual object in an environment from an image representing the environment around the wearable deice (101), the image obtained through a camera (180) of the wearable device (101). The method comprises determining (315) a risk level of the at least one first visual object. The method comprises identifying (320) at least one second visual object for which a risk level higher than the reference level is determined among the at least one first visual object. The method comprises displaying (325) the at least one second visual object and a visual object for the at least one second visual object.

In one embodiment, the method comprises displaying a virtual object or an interface for initial setup of the wearable device (101) through a display (160) of the wearable device (101). The method comprises receiving a response of the user for the virtual object or the interface. The physical capability information of the user is determined based on the response.

In one embodiment, the physical capability information of the user includes at least one of eye reaction velocity of the user, body reaction velocity of the user, identifiable range in the image through the eye of the user, or range of motion of body of the user in the environment.

In one embodiment, the method comprises obtaining information for the image. The information for the image includes at least one of 2 dimension (2D) information of the image, information for depth of the environment, information for a unit configuring the environment, or 3D position information of the at least one first visual object.

In one embodiment, the method comprises obtaining information for each visual object of the at least one first visual object and position information of the user, based on the information for the image. The information for each visual object includes at least one of configuration information of a visual object, distance from a visual object to the user, or velocity of a visual object.

In one embodiment, the risk level is determined for each of the at least one first visual object based on the position information of the user and the information for each visual object.

In one embodiment, the method comprises, in response to an average value of the risk level larger than or equal to a threshold value, identifying a state of the environment as a first state. The method comprises, in response to the average value of the risk level less than the threshold value, identifying the state of the environment as a second state. The at least one second visual object has the risk level higher than the reference level applied a weight value in response to the state of the environment is the first state.

According to various embodiments, a wearable device (101) comprises a camera (180). A wearable device (101) comprises a display (160). A wearable device (101) comprises a processor (120). The processor (120) is configured to identify (305) a reference level corresponding to agility of a user among a plurality of reference levels indicating the agility, based on physical capability information of the user. The processor (120) is configured to identify (310) visual objects corresponding to external objects in an environment from an image representing the environment around the wearable deice (101), which is obtained through the camera (180). The processor (120) is configured to, based on identifying a first reference level among the plurality of reference levels, identify (320, 325) at least one first visual object of the visual objects and display (320, 325) the at least one visual object and a visual object for the at least one visual object. The processor (120) is configured to, based on identifying a second reference level lower than the first reference level among the plurality of reference levels, identify (320, 325) second visual objects including the at least one first visual object among the visual objects and display (320, 325) the second visual objects and visual objects for the second visual objects.

In one embodiment, the processor (120) is configured to display a virtual object or an interface for initial setup of the wearable device (101) through the display (160). The processor (120) is configured to receive a response of the user for the virtual object or the interface. The physical capability information of the user is determined based on the response of the user.

In one embodiment, the physical capability information of the user includes at least one of eye reaction velocity of the user, body reaction velocity of the user, identifiable range in the image through the eye of the user, or range of motion of body of the user in the environment.

In one embodiment, the processor (120) is further configured to obtain information for the image. The processor (120) is further configured to obtain information for each visual object of the visual objects and position information of the user, based on the information for the image. The processor (120) is further configured to wherein the information for the image includes at least one of 2 dimension (2D) information of the image, information for depth of the environment, information for a unit configuring the environment, or 3D position information of the visual objects. The information for each visual object includes at least one of configuration information of a visual object, distance from a visual object to the user, or velocity of a visual object.

In one embodiment, each the at least one first visual object and the second visual objects is identified based on the position information of the user and the information for each visual object.

In one embodiment, the at least one first visual object is identified based on a third reference level to which a weight value is applied to the first reference level. The second visual objects are identified based on a fourth reference level to which a weight value is applied to the second reference level.

The electronic device according to various embodiments disclosed in the present document may be various types of devices. The electronic device may include, for example, a portable communication device (e.g., a smartphone), a computer device, a portable multimedia device, a portable medical device, a camera, a wearable device, or a home appliance. The electronic device according to an embodiment of the present document is not limited to the above-described devices.

The various embodiments and terms used herein are not intended to limit the technical features described herein to specific embodiments and should be understood to include various modifications, equivalents, or substitutes of the embodiment. With respect to the description of the drawings, similar reference numerals may be used for similar or related components. The singular form of the noun corresponding to the item may include one or more of the items unless clearly indicated differently in a related context. In this document, each of the phrases such as "A or B", "at least one of A and B", "at least one of A, B and C", "at least one of A, B, or C", and "at least one of A, B, or C" may include any one of the phrases together, or all possible combinations thereof. Terms such as "first", "second", or "second", or "second" may be used simply to distinguish a corresponding component from another corresponding component, and are not limited to other aspects (e.g., importance or order). When some (e.g., the first) component is referred to as "coupled" or "connected" in another (e.g., the second) component, with or without the term "functional" or "communicatively", it means that some of the components can be connected directly (e.g., wired), wirelessly, or through a third component.

The term "module" used in various embodiments of the present document may include a unit implemented in hardware, software, or firmware and be used interchangeably with terms such as logic, logic block, component, or circuitry, for example. The module may be a minimum unit or a part of the integrally configured component or the component that performs one or more functions. For example, according to an embodiment, the module may be implemented in the form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments disclosed in the present document may be provided by being included in a computer program product. The computer program products may be traded between sellers and buyers as products. The computer program products may be distributed in the form of device-readable storage media (e.g., compact disc read only memory (CD-ROM), or distributed (e.g., downloaded or uploaded) directly or online through an application store (e.g., Play Store^{™}) or between two user devices (e.g., smartphones). In the case of online distribution, at least some of the computer program products may be temporarily stored or temporarily created on a device-readable storage medium such as a manufacturer's server, a server in an application store, or a memory in a relay server.

According to various embodiments, each of the above-described components (e.g., a module or a program) may include a single object or a plurality of objects, and some of the plurality of objects may be separated and disposed in other components. According to various embodiments, one or more components or operations of the above-described corresponding components may be omitted, or one or more other components or operations may be added. Alternatively, or additionally, a plurality of components (e.g., modules or programs) may be integrated into one component. In this case, the integrated component may perform one or more functions of each of the components in the same or similar manner as those performed by the corresponding component among the plurality of components before the integration. According to various embodiments, operations performed by a module, a program, or other components may be executed sequentially, in parallel, repeatedly, or heuristic, performed in a different order, omitted, or one or more other operations may be added.

## Claims

1. A wearable device (101) comprising:
a camera (180);
a display (160);
memory (130) storing instructions; and
a processor (120),
wherein the instructions, when executed by the processor (120), cause the wearable device (101) to:
obtain (300) physical capability information of a user wearing the wearable device (101) for identifying agility of the user,
identify (305) a reference level from among a plurality of reference levels based on the physical capability information,
identify (310) at least one first visual object in an environment from an image representing the environment around the wearable device (101), the image obtained through the camera (180),
determine (315) a risk level of each of the at least one first visual object,
identify (320), from among the at least one first visual object, at least one second visual object of which a risk level is higher than the reference level, and
display (325) the at least one second visual object and additional information for visually highlighting the at least one second visual object.

2. The wearable device (101) of claim 1,
wherein the instructions, when executed by the processor (120), cause the wearable device (101) to::
display a virtual object or an interface for initial setup of the wearable device (101) through the display (160), and
receive a response of the user for the virtual object or the interface,
wherein the physical capability information of the user is determined based on the response of the user.

3. The wearable device (101) of any preceding claim,
wherein the physical capability information of the user includes at least one of eye reaction velocity of the user, body reaction velocity of the user, identifiable range in the image through the eye of the user, or range of motion of body of the user in the environment.

4. The wearable device (101) of any preceding claim,
wherein the instructions, when executed by the processor (120), cause the wearable device (101) to obtain information for the image,
wherein the information for the image includes at least one of 2 dimension (2D) information of the image, information for depth of the environment, information for a unit configuring the environment, or 3D position information of the at least one first visual object.

5. The wearable device (101) of claim 4,
wherein the instructions, when executed by the processor (120), cause the wearable device (101) to obtain information for each visual object of the at least one first visual object and position information of the user, based on the information for the image,
wherein the information for each visual object includes at least one of configuration information of a visual object, distance from a visual object to the user, or velocity of a visual object.

6. The wearable device (101) of claim 5,
wherein, for each visual object, the risk level is determined based on the position information of the user and the information for corresponding visual object.

7. The wearable device (101) of any preceding claim,
wherein the instructions, when executed by the processor (120), cause the wearable device (101) to:
in a case that an average value of risk levels of the at least one first visual object is larger than or equal to a threshold value, identify a state of the environment as a first state, and
in a case that the average value of the risk levels of the at least one first visual object is less than the threshold value, identify the state of the environment as a second state,
wherein, in response to the state of the environment being the first state, another object to be highlighted is identified, from among the at least one first visual object, using a weighted reference level obtained by applying a weight value to the reference level, and
wherein, in response to the state of the environment being the second state, the at least one second visual object is identified, from among the at least one first visual object, using the reference level.

8. A method performed in a wearable device (101) comprising:
obtaining (300) physical capability information of a user wearing the wearable device (101) for identifying agility of the user,
identifying (305) a reference level from among a plurality of reference levels based on the physical capability information,
identifying (310) at least one first visual object in an environment from an image representing the environment around the wearable device (101), the image obtained through a camera (180) of the wearable device (101),
determining (315) a risk level of each of the at least one first visual object,
identifying, (320) from among the at least one first visual object, at least one second visual object of which a risk level is higher than the reference level, and
displaying (325) the at least one second visual object and additional information for visually highlighting the at least one second visual object.

9. The method of claim 8, comprising:
displaying a virtual object or an interface for initial setup of the wearable device (101) through a display (160) of the wearable device (101), and
receiving a response of the user for the virtual object or the interface,
wherein the physical capability information of the user is determined based on the response.

10. The method of one of claim 8 and claim 9, comprising:
wherein the physical capability information of the user includes at least one of eye reaction velocity of the user, body reaction velocity of the user, identifiable range in the image through the eye of the user, or range of motion of body of the user in the environment.

11. The method of any one of claims 8 to 10, comprising:
obtaining information for the image,
wherein the information for the image includes at least one of 2 dimension (2D) information of the image, information for depth of the environment, information for a unit configuring the environment, or 3D position information of the at least one first visual object.

12. The method of claim 11, comprising,
obtaining information for each visual object of the at least one first visual object and position information of the user, based on the information for the image,
wherein the information for each visual object includes at least one of configuration information of a visual object, distance from a visual object to the user, or velocity of a visual object.

13. The method of claim 12,
wherein, for each visual object, the risk level is determined based on the position information of the user and the information for the corresponding visual object.

14. The method of any one of claims 8 to 13, comprising:
in a case that an average value of risk levels of the at least one first visual object is larger than or equal to a threshold value, identifying a state of the environment as a first state, and
in a case that the average value of the risk levels of the at least one first visual object is less than the threshold value, identifying the state of the environment as a second state,
wherein, in response to the state of the environment being the first state, another object to be highlighted is identified, from among the at least one first visual object, using a weighted reference level obtained by applying a weight value to the reference level, and
wherein, in response to the state of the environment being the second state, the at least one second visual object is identified, from among the at least one first visual object, using the reference level.

15. The wearable device (101) of claim 1,
wherein the plurality of references levels are used for dividing physical capability information into levels of the physical capability information to distinguish users including the user wearing the wearable device (101).

## Patentansprüche

1. Tragbare Vorrichtung (101), die Folgendes umfasst:
eine Kamera (180);
ein Display (160);
einen Speicher (130), der Anweisungen speichert; und
einen Prozessor (120),
wobei die Anweisungen, wenn sie von dem Prozessor (120) ausgeführt werden, die tragbare Vorrichtung (101) zu Folgendem veranlassen:
Erhalten (300) von Informationen über die körperliche Leistungsfähigkeit des Benutzers, der die tragbare Vorrichtung (101) trägt, zum Identifizieren der Agilität des Benutzers,
Identifizieren (305) eines Referenzniveaus aus einer Vielzahl von Referenzniveaus basierend auf den Informationen über die körperliche Leistungsfähigkeit,
Identifizieren (310) mindestens eines ersten visuellen Objekts in einer Umgebung aus einem Bild, das die Umgebung um die tragbare Vorrichtung (101) herum darstellt, wobei das Bild durch die Kamera (180) erhalten wird,
Bestimmen (315) eines Risikoniveaus für jedes des mindestens einen ersten visuellen Objekts,
Identifizieren (320) mindestens eines zweiten visuellen Objekts, dessen Risikoniveau höher als das Referenzniveau ist, aus dem mindestens einen ersten visuellen Objekt, und
Anzeigen (325) des mindestens einen zweiten visuellen Objekts und zusätzlicher Informationen zur visuellen Hervorhebung des mindestens einen zweiten visuellen Objekts.

2. Tragbare Vorrichtung (101) nach Anspruch 1,
wobei die Anweisungen, wenn sie von dem Prozessor (120) ausgeführt werden, die tragbare Vorrichtung (101) zu Folgendem veranlassen:
Anzeigen eines virtuellen Objekts oder einer Schnittstelle für die Ersteinrichtung der tragbaren Vorrichtung (101) über das Display (160), und
Empfangen einer Reaktion des Benutzers für das virtuelle Objekt oder die Schnittstelle,
wobei die Informationen über die körperliche Leistungsfähigkeit des Benutzers basierend auf der Reaktion des Benutzers bestimmt werden.

3. Tragbare Vorrichtung (101) nach einem der vorhergehenden Ansprüche,
wobei die Informationen über die körperliche Leistungsfähigkeit des Benutzers die Augenreaktionsgeschwindigkeit des Benutzers, die Körperreaktionsgeschwindigkeit des Benutzers, den durch das Auge des Benutzers erkennbaren Bereich in dem Bild und/oder den Bewegungsbereich des Körpers des Benutzers in der Umgebung enthalten.

4. Tragbare Vorrichtung (101) nach einem der vorhergehenden Ansprüche,
wobei die Anweisungen, wenn sie von dem Prozessor (120) ausgeführt werden, die tragbare Vorrichtung (101) veranlassen, Informationen für das Bild zu erhalten,
wobei die Informationen für das Bild 2-dimensionale (2D) Informationen des Bildes, Informationen zur Tiefe der Umgebung, Informationen für eine die Umgebung konfigurierende Einheit und/oder 3D-Positionsinformationen des mindestens einen ersten visuellen Objekts enthalten.

5. Tragbare Vorrichtung (101) nach Anspruch 4,
wobei die Anweisungen, wenn sie von dem Prozessor (120) ausgeführt werden, die tragbare Vorrichtung (101) veranlassen, Informationen für jedes visuelle Objekt des mindestens einen ersten visuellen Objekts und Positionsinformationen des Benutzers basierend auf den Informationen für das Bild zu erhalten,
wobei die Informationen für jedes visuelle Objekt Konfigurationsinformationen eines visuellen Objekts, die Entfernung von einem visuellen Objekt zu dem Benutzer und/oder die Geschwindigkeit eines visuellen Objekts enthalten.

6. Tragbare Vorrichtung (101) nach Anspruch 5,
wobei für jedes visuelle Objekt das Risikoniveau basierend auf den Positionsinformationen des Benutzers und den Informationen für das entsprechende visuelle Objekt bestimmt wird.

7. Tragbare Vorrichtung (101) nach einem der vorhergehenden Ansprüche,
wobei die Anweisungen, wenn sie von dem Prozessor (120) ausgeführt werden, die tragbare Vorrichtung (101) zu Folgendem veranlassen:
falls ein Durchschnittswert der Risikoniveaus des mindestens einen ersten visuellen Objekts größer als oder gleich einem Schwellenwert ist, Identifizieren eines Zustands der Umgebung als ersten Zustand, und
falls der Durchschnittswert der Risikoniveaus des mindestens einen ersten visuellen Objekts kleiner als der Schwellenwert ist, Identifizieren des Zustands der Umgebung als zweiten Zustand,
wobei als Reaktion darauf, dass der Zustand der Umgebung der erste Zustand ist, ein anderes hervorzuhebendes Objekt aus dem mindestens einen ersten visuellen Objekt unter Verwendung eines gewichteten Referenzniveaus identifiziert wird, das durch Anwenden eines Gewichtungswerts auf das Referenzniveau erhalten wird, und
wobei als Reaktion darauf, dass der Zustand der Umgebung der zweite Zustand ist, das mindestens eine zweite visuelle Objekt aus dem mindestens einen ersten visuellen Objekt unter Verwendung des Referenzniveaus identifiziert wird.

8. Verfahren, das in einer tragbaren Vorrichtung (101) ausgeführt wird und Folgendes umfasst:
Erhalten (300) von Informationen über die körperliche Leistungsfähigkeit des Benutzers, der die tragbare Vorrichtung (101) trägt, zum Identifizieren der Agilität des Benutzers,
Identifizieren (305) eines Referenzniveaus aus einer Vielzahl von Referenzniveaus basierend auf den Informationen über die körperliche Leistungsfähigkeit,
Identifizieren (310) mindestens eines ersten visuellen Objekts in einer Umgebung aus einem Bild, das die Umgebung um die tragbare Vorrichtung (101) herum darstellt, wobei das Bild durch eine Kamera (180) der tragbaren Vorrichtung (101) erhalten wird,
Bestimmen (315) eines Risikoniveaus für jedes des mindestens einen ersten visuellen Objekts,
Identifizieren (320) mindestens eines zweiten visuellen Objekts, dessen Risikoniveau höher als das Referenzniveau ist, aus dem mindestens einen ersten visuellen Objekt, und
Anzeigen (325) des mindestens einen zweiten visuellen Objekts und zusätzlicher Informationen zur visuellen Hervorhebung des mindestens einen zweiten visuellen Objekts.

9. Verfahren nach Anspruch 8, das Folgendes umfasst:
Anzeigen eines virtuellen Objekts oder einer Schnittstelle für die Ersteinrichtung der tragbaren Vorrichtung (101) über ein Display (160) der tragbaren Vorrichtung (101), und
Empfangen einer Reaktion des Benutzers für das virtuelle Objekt oder die Schnittstelle,
wobei die Informationen über die körperliche Leistungsfähigkeit des Benutzers basierend auf der Reaktion bestimmt werden.

10. Verfahren nach Anspruch 8 oder Anspruch 9, das Folgendes umfasst:
wobei die Informationen über die körperliche Leistungsfähigkeit des Benutzers die Augenreaktionsgeschwindigkeit des Benutzers, die Körperreaktionsgeschwindigkeit des Benutzers, den durch das Auge des Benutzers erkennbaren Bereich in dem Bild und/oder den Bewegungsbereich des Körpers des Benutzers in der Umgebung enthalten.

11. Verfahren nach einem der Ansprüche 8 bis 10, das Folgendes umfasst:
Erhalten von Informationen für das Bild,
wobei die Informationen für das Bild 2-dimensionale (2D) Informationen des Bildes, Informationen zur Tiefe der Umgebung, Informationen für eine die Umgebung konfigurierende Einheit und/oder 3D-Positionsinformationen des mindestens einen ersten visuellen Objekts enthalten.

12. Verfahren nach Anspruch 11, das Folgendes umfasst:
Erhalten von Informationen für jedes visuelle Objekt des mindestens einen ersten visuellen Objekts und Positionsinformationen des Benutzers basierend auf den Informationen für das Bild,
wobei die Informationen für jedes visuelle Objekt Konfigurationsinformationen eines visuellen Objekts, die Entfernung von einem visuellen Objekt zu dem Benutzer und/oder die Geschwindigkeit eines visuellen Objekts enthalten.

13. Verfahren nach Anspruch 12,
wobei für jedes visuelle Objekt das Risikoniveau basierend auf den Positionsinformationen des Benutzers und den Informationen für das entsprechende visuelle Objekt bestimmt wird.

14. Verfahren nach einem der Ansprüche 8 bis 13, das Folgendes umfasst:
falls ein Durchschnittswert der Risikoniveaus des mindestens einen ersten visuellen Objekts größer als oder gleich einem Schwellenwert ist, Identifizieren eines Zustands der Umgebung als ersten Zustand, und
falls der Durchschnittswert der Risikoniveaus des mindestens einen ersten visuellen Objekts kleiner als der Schwellenwert ist, Identifizieren des Zustands der Umgebung als zweiten Zustand,
wobei als Reaktion darauf, dass der Zustand der Umgebung der erste Zustand ist, ein anderes hervorzuhebendes Objekt aus dem mindestens einen ersten visuellen Objekt unter Verwendung eines gewichteten Referenzniveaus identifiziert wird, das durch Anwenden eines Gewichtungswerts auf das Referenzniveau erhalten wird, und
wobei als Reaktion darauf, dass der Zustand der Umgebung der zweite Zustand ist, das mindestens eine zweite visuelle Objekt aus dem mindestens einen ersten visuellen Objekt unter Verwendung des Referenzniveaus identifiziert wird.

15. Tragbare Vorrichtung (101) nach Anspruch 1,
wobei die Vielzahl von Referenzniveaus zum Unterteilen von Informationen über die körperliche Leistungsfähigkeit in Niveaus der Informationen über die körperliche Leistungsfähigkeit verwendet werden, um Benutzer, einschließlich des Benutzers, der die tragbare Vorrichtung (101) trägt, zu unterscheiden.

## Revendications

1. Dispositif portable (101) comprenant :
une caméra (180) ;
une unité d'affichage (160) ;
une mémoire (130) stockant des instructions ; et
un processeur (120),
où les instructions, lorsqu'elles sont exécutées par le processeur (120), amènent le dispositif portable (101) à :
obtenir (300) des informations sur les capacités physiques d'un utilisateur portant le dispositif portable (101) pour identifier l'agilité de l'utilisateur,
identifier (305) un niveau de référence parmi une pluralité de niveaux de référence en fonction des informations sur les capacités physiques,
identifier (310) au moins un premier objet visuel dans un environnement à partir d'une image représentant l'environnement autour du dispositif portable (101), l'image obtenue à travers la caméra (180),
déterminer (315) un niveau de risque de chacun de l'au moins un premier objet visuel,
identifier (320), parmi l'au moins un premier objet visuel, au moins un deuxième objet visuel dont un niveau de risque est supérieur au niveau de référence, et
afficher (325) l'au moins un deuxième objet visuel et des informations supplémentaires pour mettre en évidence visuellement l'au moins un deuxième objet visuel.

2. Dispositif portable (101) selon la revendication 1,
où les instructions, lorsqu'elles sont exécutées par le processeur (120), amènent le dispositif portable (101) à :
afficher un objet virtuel ou une interface pour la configuration initiale du dispositif portable (101) à travers l'écran (160), et
recevoir une réponse de l'utilisateur pour l'objet virtuel ou l'interface,
où les informations sur les capacités physiques de l'utilisateur sont déterminées en fonction de la réponse de l'utilisateur.

3. Dispositif portable (101) selon l'une quelconque des revendications précédentes,
où les informations sur les capacités physiques de l'utilisateur comprennent au moins l'un des éléments suivants : la vitesse de réaction oculaire de l'utilisateur, la vitesse de réaction corporelle de l'utilisateur, la zone identifiable dans l'image à travers l'œil de l'utilisateur, ou l'amplitude des mouvements corporels de l'utilisateur dans l'environnement.

4. Dispositif portable (101) selon l'une quelconque des revendications précédentes,
où les instructions, lorsqu'elles sont exécutées par le processeur (120), amènent le dispositif portable (101) à obtenir des informations relatives à l'image,
où les informations relatives à l'image comprennent au moins l'un des éléments suivants : des informations bidimensionnelles (2D) de l'image, des informations de profondeur de l'environnement, des informations relatives à une unité configurant l'environnement, ou des informations de position 3D de l'au moins un premier objet visuel.

5. Dispositif portable (101) selon la revendication 4,
où les instructions, lorsqu'elles sont exécutées par le processeur (120), amènent le dispositif portable (101) à obtenir des informations pour chaque objet visuel de l'au moins un premier objet visuel et des informations de position de l'utilisateur, en fonction des informations relatives à l'image,
où les informations pour chaque objet visuel comprennent au moins l'un des éléments suivants : des informations de configuration d'un objet visuel, la distance entre un objet visuel et l'utilisateur, ou la vitesse d'un objet visuel.

6. Dispositif portable (101) selon la revendication 5,
où, pour chaque objet visuel, le niveau de risque est déterminé en fonction des informations de position de l'utilisateur et des informations relatives à l'objet visuel correspondant.

7. Dispositif portable (101) selon l'une quelconque des revendications précédentes,
où les instructions, lorsqu'elles sont exécutées par le processeur (120), amènent le dispositif portable (101) à :
dans un cas où une valeur moyenne des niveaux de risque de l'au moins un premier objet visuel est supérieure ou égale à une valeur de seuil, identifier un état de l'environnement comme un premier état, et
dans un cas où la valeur moyenne des niveaux de risque de l'au moins un premier objet visuel est inférieure à la valeur de seuil, identifier l'état de l'environnement comme un deuxième état,
où, lorsque l'état de l'environnement correspond au premier état, identifier un autre objet à mettre en évidence, parmi l'au moins un premier objet visuel, à l'aide d'un niveau de référence pondéré obtenu en appliquant une valeur de pondération au niveau de référence, et
où, lorsque l'état de l'environnement correspond au deuxième état, identifier l'au moins un deuxième objet visuel, parmi l'au moins un premier objet visuel, à l'aide du niveau de référence.

8. Procédé effectué dans un dispositif portable (101) comprenant :
obtenir (300) des informations sur les capacités physiques d'un utilisateur portant le dispositif portable (101) pour identifier l'agilité de l'utilisateur,
identifier (305) un niveau de référence parmi une pluralité de niveaux de référence en fonction des informations sur les capacités physiques,
identifier (310) au moins un premier objet visuel dans un environnement à partir d'une image représentant l'environnement autour du dispositif portable (101), l'image obtenue à travers une caméra (180) du dispositif portable (101),
déterminer (315) un niveau de risque de chacun de l'au moins un premier objet visuel,
identifier (320), parmi l'au moins un premier objet visuel, au moins un deuxième objet visuel dont un niveau de risque est supérieur au niveau de référence, et
afficher (325) l'au moins un deuxième objet visuel et des informations supplémentaires pour mettre en évidence visuellement l'au moins un deuxième objet visuel.

9. Procédé selon la revendication 8, comprenant :
afficher un objet virtuel ou une interface pour la configuration initiale du dispositif portable (101) à travers une unité d'affichage (160) du dispositif portable (101), et
recevoir une réponse de l'utilisateur pour l'objet virtuel ou l'interface,
où les informations sur les capacités physiques de l'utilisateur sont déterminées en fonction de la réponse.

10. Procédé selon l'une des revendications 8 et 9, comprenant :
où les informations sur les capacités physiques de l'utilisateur comprennent au moins l'un des éléments suivants : la vitesse de réaction oculaire de l'utilisateur, la vitesse de réaction corporelle de l'utilisateur, la zone identifiable dans l'image à travers l'œil de l'utilisateur, ou l'amplitude des mouvements corporels de l'utilisateur dans l'environnement.

11. Procédé selon l'une quelconque des revendications 8 à 10, comprenant :
obtenir des informations relatives à l'image,
où les informations relatives à l'image comprennent au moins l'un des éléments suivants : des informations bidimensionnelles (2D) de l'image, des informations de profondeur de l'environnement, des informations relatives à une unité configurant l'environnement, ou des informations de position 3D de l'au moins un premier objet visuel.

12. Procédé selon la revendication 11, comprenant,
obtenir des informations pour chaque objet visuel de l'au moins un premier objet visuel et des informations de position de l'utilisateur, en fonction des informations relatives à l'image,
où les informations pour chaque objet visuel comprennent au moins l'un des éléments suivants : des informations de configuration d'un objet visuel, la distance entre un objet visuel et l'utilisateur, ou la vitesse d'un objet visuel.

13. Procédé selon la revendication 12,
où, pour chaque objet visuel, le niveau de risque est déterminé en fonction des informations de position de l'utilisateur et des informations relatives à l'objet visuel correspondant.

14. Procédé selon l'une quelconque des revendications 8 à 13, comprenant :
dans un cas où une valeur moyenne des niveaux de risque de l'au moins un premier objet visuel est supérieure ou égale à une valeur de seuil, identifier un état de l'environnement comme un premier état, et
dans un cas où la valeur moyenne des niveaux de risque de l'au moins un premier objet visuel est inférieure à la valeur de seuil, identifier l'état de l'environnement comme un deuxième état,
où, lorsque l'état de l'environnement correspond au premier état, identifier un autre objet à mettre en évidence, parmi l'au moins un premier objet visuel, à l'aide d'un niveau de référence pondéré obtenu en appliquant une valeur de pondération au niveau de référence, et
où, lorsque l'état de l'environnement correspond au deuxième état, identifier l'au moins un deuxième objet visuel, parmi l'au moins un premier objet visuel, à l'aide du niveau de référence.

15. Dispositif portable (101) selon la revendication 1,
où la pluralité des niveaux de référence est utilisée pour diviser les informations sur les capacités physiques en niveaux d'informations sur les capacités physiques afin de distinguer les utilisateurs, y compris l'utilisateur portant le dispositif portable (101).
